(19) **Europäisches Patentamt / European Patent Office / Office européen des brevets**

(11) **EP 2 141 476 B1**

(12) **EUROPEAN PATENT SPECIFICATION**

(45) Date of publication and mention
of the grant of the patent:
**13.04.2016 Bulletin 2016/15**

(51) Int Cl.:
***G01M 17/02*** *(2006.01)*

(21) Application number: **08171657.3**

(22) Date of filing: **15.12.2008**

(54) **System and method for analyzing tire uniformity**

System und Verfahren zur Analyse der Reifengleichförmigkeit

Système et procédé d'analyse de l'uniformité de pneu

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **03.07.2008 KR 20080064268**

(43) Date of publication of application:
**06.01.2010 Bulletin 2010/01**

(73) Proprietor: **Hankook Tire Co., Ltd**
**Gangnam-Gu**
**Seoul**
**135-723 (KR)**

(72) Inventor: **Lee, Won Hyuck**
**305-725, DAEJEON (KR)**

(74) Representative: **Intès, Didier Gérard André et al**
**Cabinet Beau de Loménie**
**158, rue de l'Université**
**75340 Paris Cedex 07 (FR)**

(56) References cited:
**EP-A2- 1 500 917     DE-A1- 10 019 387**
**US-A- 4 506 981**

**Description**

**Field of the Invention**

The present invention relates generally to a system for analyzing tire uniformity, and more particularly to a system for analyzing tire uniformity which enables the uniformity analysis process to be performed in a short period of time with precision and the uniformity measurement not to be affected by the condition of a test center.

**Description of the Related Art**

As is well known in the art, a green tire is manufactured on a tire building drum by way of disposing a variety of rubber products in turn, including an inner liner, carcass, belt structure, tread portion, sidewall portion, bead portion or the like that are partly manufactured in the separate processes. The resulting green tire is then put into a mold and vulcanized at an elevated temperature (approximately 120-150 °C) for a period of time (approximately 10-30 minutes), and after substantially cooling down a finished tire having a required configuration and physical property is obtained. Before being shipped to a customer, a series of tests are performed on the finished tire in order to evaluate the quality of the tire whether the tire falls within a certain range of uniformity characteristics.

Generally, uniformity is defined as what characteristics a perfect or ideal tire would have for a measured characteristic when tested. In other words, the uniformity characteristics can be depicted as a deviation from perfect roundness of the outer circumference of the tire. The uniformity characteristics consist of a low threshold value and a high threshold value. If the tested uniformity of a tire is below the low threshold value, the deformation of the tire seems not detrimental to a vehicle ride and thus the tire can be distributed for sale. On the other hand, if the tested uniformity of a tire is over the high threshold value, the tire may be discarded or scrapped. If the tested uniformity of a tire is between the low threshold value and the high threshold value, the tire may be salable after correction for uniformity.

The tire having uniformity over the high threshold value generally causes undesirable vibration, noise or severe wear while driving the vehicle, which seems to deteriorate the comfort of the ride as well as shorten the lifetime of the tire.

A variety of devices and methods for measuring and correcting the uniformity of a tire are known and described, for example, in U.S. Patent No. 4,458,526, U.S. Patent No. 5,022,186, U.S. Patent No. 5,103,669 or U.S. Patent No. 5,365,781. As described in these patents, a tire uniformity tester or tire uniformity measuring machine is generally used to measure the uniformity of the tire. An inflated tire is mounted on the uniformity test machine and rotated at a predetermined speed. The lateral force exerted by the tire on the machine is then measured to calculate the force variation or uniformity characteristics in the tire during rotation. The uniformity characteristics are further processed in a computer to obtain information for correction of a tire. The uniformity tests as described hereinabove are disadvantageous in that they require a large amount of time because the test comprises of various steps to be performed in turn and needs repetitious measurement to get a target value. Further, it can be noted that the tire uniformity measurement may include an erroneous contribution from the uniformity test machine itself, which requires another step to identify and remove the contribution from the uniformity test machine.

Documents DE 10019387, EP 1500917 and US 4506981 disclose other known methods for measuring the uniformity of a tire according to the preamble of claim 1.

Meanwhile, as an alternative method to measure the tire uniformity, a point scanning method is proposed in the art, wherein a laser pointer is used to scan every entire surface of a tire to being tested. This point scanning method, however, turned out to have the drawbacks that the scanning work is time consuming, and more importantly the uniformity measurement has substantially high error probability depending on the condition of a test center.

SUMMARY OF THE INVENTION

With the foregoing drawbacks in mind, it is therefore an object of the invention to provide a system for analyzing tire uniformity which enables the uniformity analysis process to be easily performed with higher precision and the uniformity measurement not to be affected by the condition of a test center.

Another object of the invention is to provide a method for analyzing tire uniformity capable of performing the entire uniformity analysis in a short period of time with greater simplicity and efficiency.

According to one aspect of the invention, there is provided a system for analyzing tire uniformity according to claim 1.

In accordance with another embodiment of the present invention, the system further comprises of a lens equipped with a diffraction grating in unitary fashion and disposed on the same axis line between a light source and a tire to being tested for focusing the light emanating from the light source on the tire.

The intensity of light emanating from the light source and being irradiated on the tire surface is given by the Formula 1:

$$I = A(x, y)\sin(\phi(x, y) + 1)$$ [Formula 1]

where I is the intensity of light as a function of position, $\phi$ is an angle at which the light is incident on the tire, and A is an integer.

With the analyzer according to the present invention, using the Fourier transform on the Formula 1 and then simplifying thereof yield the Formula 4:

$$F(I(x,y)) = \frac{1}{2}[F(A\exp(i\phi))]$$ [Formula 4]

By the inverse Fourier transform of the Formula 4, we then have calculated phase information of the tire.

The analyzer outputs the phase information in the form of either an image having various color levels or a numerical data on the basis of the angular position of the tire. That is, the analyzer calculates the amount of deformation on the tire by transforming the difference of phase information between an ideal tire (having no deformation) and a tire being tested (having deformation). The analyzer is then subjected to display the amount of actual deformation between the two tires in the form of either an image having various colors or numerals on the monitor screen.

According to another aspect of the invention, there is provided a method for analyzing a tire uniformity according to claim 4.

## BRIEF DESCRIPTION OF THE DRAWINGS

The above and other objects, features and other advantages of the present invention will become apparent from a review of the following detailed description of the preferred embodiment taken in conjunction with the accompanying drawings, in which:

FIG. 1 is a schematic configuration of a system for analyzing tire uniformity in accordance with a preferred embodiment of the invention;

FIG. 2 is a photograph depicting an image of a tire taken by the photographing means in FIG. 1;

FIG. 3 is an image displayed on the monitor which is obtained by Fourier transform analysis;

FIG. 4 is similar to FIG. 3, wherein the image is corrected by removing the imaginary part;

FIG. 5 is an image displayed on the monitor representing the phase information of the tire;

FIG. 6 is a photograph illustrating an image of a tire before deformation of the tire;

FIG. 7 is a photograph corresponding to FIG. 6, wherein the image is obtained after deformation of the tire in order to compare phase information with that of FIG. 6; and

FIG. 8 is an image displayed on the monitor illustrating the amount of the actual deformation in the tire before and after deformation.

## DETAILED DESCRIPTION OF THE PREFERRED EMBODIMENTS

Hereinafter, an exemplary embodiment of the present invention will be described in detail with reference to the accompanying drawings.

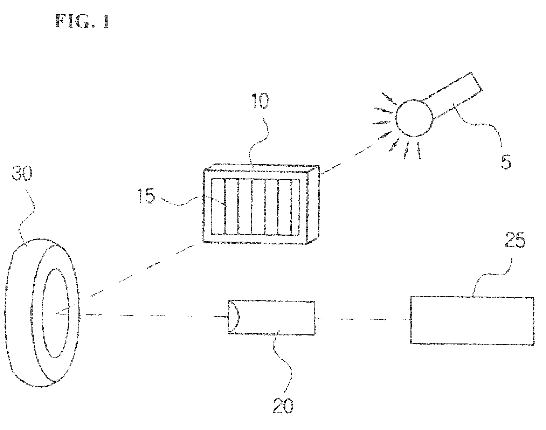

FIG. 1 is a schematic configuration of a system for analyzing tire uniformity in accordance with a preferred embodiment of the invention. Referring now to FIG. 1, the system for analyzing tire uniformity 1 comprises a light source 5 for illuminating light on a tire 30 to being tested, a sine diffraction grating 15 with a lens 10 disposed on the same axis line between the light source 5 and the tire 30 for producing light having a sine pattern, a photographing means 20 for taking an image of the tire 30 in which the sine pattern is projected on its outer surface by the diffracted light passing through the diffraction grating 15, and an analyzer 25 for determining a uniformity of the tire 30 by analyzing the sine pattern formed on the surface of the tire 30.

The light source 5 irradiates light having enough intensity to allow the light to be incident with a predetermined angle on the surface of the tire 30 through both the lens 10 and the sin diffraction grating 15. The lens 10 is a conventional lens being used in the art, but alternatively, the lens 10 may be provided with a sine diffraction grating 15 in unitary fashion and formed in circular, rectangular shape or the like. The sine diffraction grating 15 is generally provided within the lens 10, and the light passing through the sine diffraction grating 15 is irradiated on the surface of the tire 30, wherein the sine pattern having a plurality of long stripes is projected on the tire surface. It is generally noted that various type of photographing devices can be adopted as a digital camera 20, but preferably a digital camera is suitable for the inventive system for analyzing the tire uniformity. For purposes of simplicity of explanation, the photographing means will be described as a digital camera 20 hereinbelow.

As illustrated in FIG. 1, the light source 5 and the lens 10 are spaced apart on the same axis line toward the tire 30, while making the light emanating from the light source 5 incident on the tire 30 with a certain angle. The digital camera 20 is positioned horizontally with respect to the tire 30, thereby maintaining a predetermined angular relationship with the light source 5 and the lens 10. Particularly, the digital camera 20 is positioned to face the tire 30 such that the digital camera 20 can take an image depicting the side elevational view of the tire 30.

Before photographing the image of the tire 30, the surface of the tire 30 is applied with a white substance, preferably a powder-like material or lacquer so that a clear and distinct image having the sine pattern can be obtained by the digital camera 20.

The analyzer 25 includes a computer (not shown) provided with a monitor (not shown), wherein a processed image is displayed on the monitor screen by analyzing the uniformity characteristics of the tire 30. The uniformity characteristics of the tire 30 are calculated from the image of the tire 30 taken by the digital camera 20. That is, the analyzer 25 determines the uniformity characteristics of the tire 30 using several Formulae described below, wherein the analyzer 25 analyzes the image of the sine pattern projected on the tire surface.

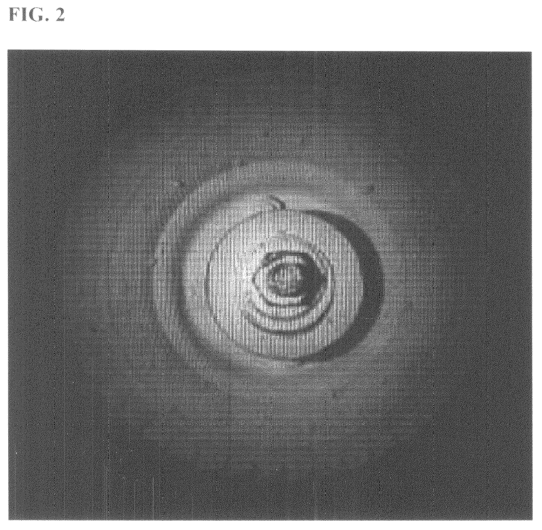

Generally, an exemplary image taken by the digital camera 20 is shown in FIG. 2. The intensity of light irradiated on the tire having a sine pattern thereon is given by the Formula 1:

$$I = A(x, y)\sin(\phi(x, y) + 1) \qquad \text{[Formula 1]}$$

where $I$ is the intensity of light as a function of position, $\phi$ is the angle at which the light is incident on the tire, and A is an integer.

The analyzer 25 rewrites the Formula 1 in order to apply the Fourier transform as the Formula 2:

$$I(x, y) = A(x, y)[\frac{\exp(i\phi) + \exp(-i\phi)}{2}] + A(x, y) \qquad \text{[Formula 2]}$$

By using the Fourier transform of the Formula 2, we have the Formula 3:

$$F(I(x, y)) = \frac{1}{2}[F(A\exp(i\phi)) + F(A\exp(-i\phi))] + F(A(x, y)) \qquad \text{[Formula 3]}$$

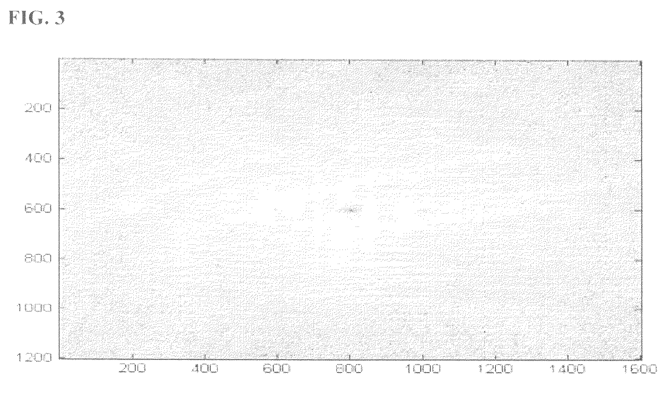

With processing the Fourier analysis on the Formula 3, the image shown in FIG. 2 will be transformed into the image as depicted in FIG. 3. The numerals located on the horizontal axis and the vertical axis in FIGS. 3 through 5 and FIG. 8 represent the size of the image.

In order to obtain phase information due to deformation of the tire 30, we use a simplified form as the Formula 4 by removing the imaginary part in the Formula 3, wherein we set the imaginary part, $F(A\exp(-i\emptyset))$ and F(A(x, y)) equal to zero.

$$F(I(x, y)) = \frac{1}{2}[F(A\exp(i\phi))] \qquad \text{[Formula 4]}$$

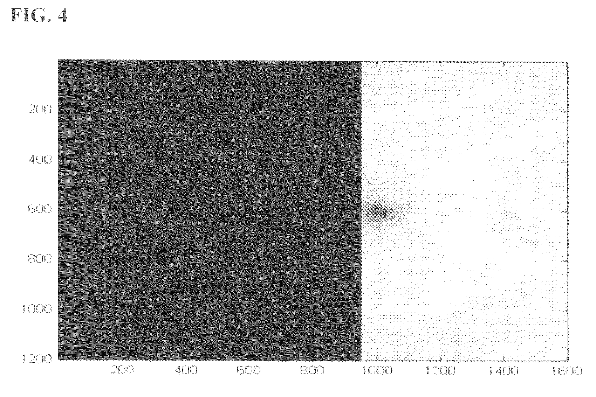

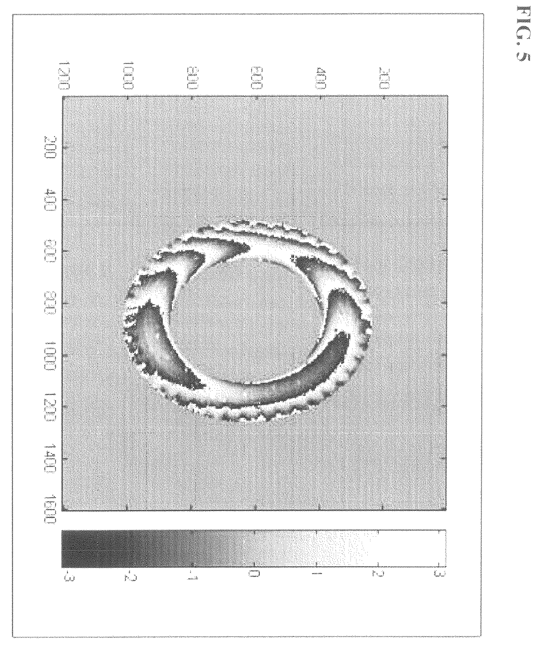

Then we have an image as shown in FIG. 4, wherein the imaginary part is removed and only the real part remains so as to illustrate the image clearer. By inverse Fourier transform of the Formula 4, we have an image as depicted in FIG. 5 that has phase information of the tire 30. A legend on the right side of FIG. 5 illustrates the change of the phase information in the form of color level or numerals. Therefore, with reference to FIG. 5, the change of the phase information of the tire can be displayed on the monitor either in color changes corresponding to the image of the tire or in numerals quantitatively calculated from phase information of the tire.

It can be appreciated that the image on the monitor will be seen in one color in case the tire has no deformation. Meanwhile, if the tire is uneven due to deformation, the image will be displayed in different colors or patterns as shown in FIG. 5.

Displacement information corresponding to respective phase information of the tire is stored at a memory means in the analyzer 25. Such displacement information will be displayed on the monitor screen in numerals according to user's option.

Then the analyzer 25 will display the amount of deformation by comparing the phase information between a deformed tire and an undeformed tire.

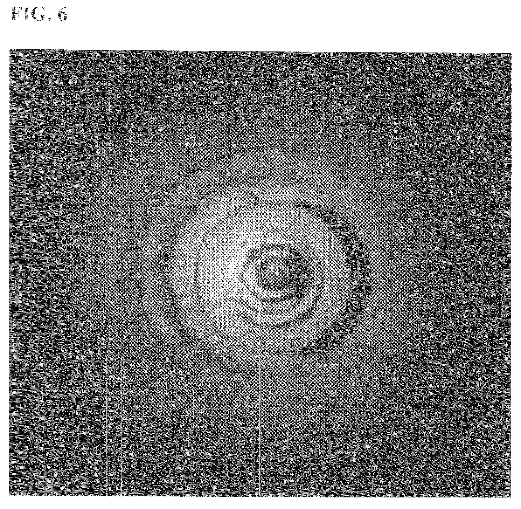

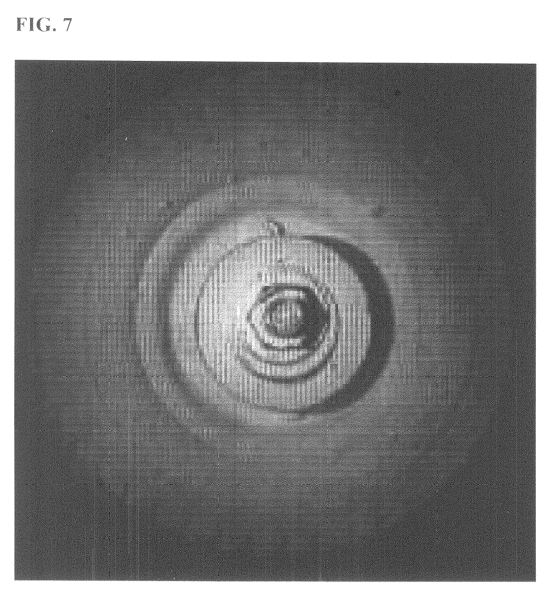

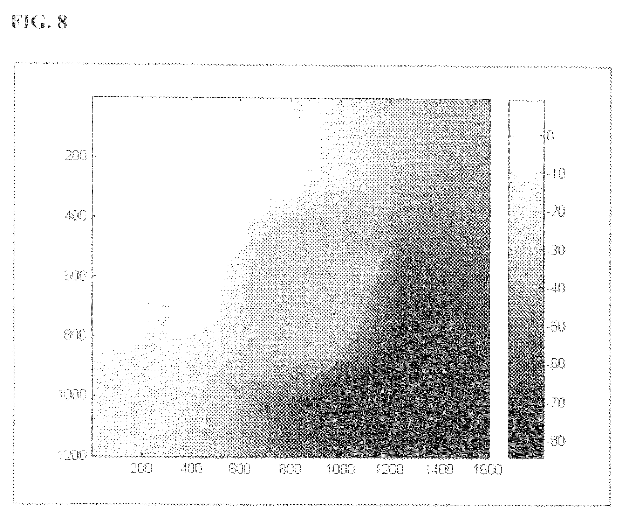

FIG. 6 illustrates an image of a tire before deformation is given to the tire, whereas FIG. 7 shows an image of a tire after deformation is given to the tire. The analyzer 25 processes the image of an ideal or perfect tire, i.e., an undeformed tire as shown in FIG. 6 with the application of the Formula 1 through 4 in sequential manners and outputs the phase information for further processing. Likewise, the analyzer 25 processed the image of a deformed tire as shown in FIG. 6 and calculates the phase information. Then, the analyzer 25 compares the above two phase information and calculates a phase difference therebetween. Finally, the analyzer 25 transforms the phase difference into displacement by Fourier transform as described hereinabove and provides an image in terms of amount of actual deformation to the monitor as illustrated in FIG. 8.

Referring to FIG. 8, it can be appreciated that a legend on the right side of FIG. 8 illustrates the amount of actual deformation in the form of color change or numerals. Accordingly, with reference to FIG. 8, the amount of actual deformation in the tire to being tested can be displayed on the monitor in different level of color change. Here, the level of color change is indicative of uniformity characteristics of the tire. In the alternative, the amount of actual deformation in the tire will be numerically displayed on the monitor in terms of numerals quantitatively calculated from the phase difference.

Hereinafter, a method for analyzing the tire uniformity using the inventive method will now be described in detail.

The test for analyzing uniformity characteristics of a tire begins by applying a white substance, preferably a powder-like material or lacquer on the surface of the tire to being tested. Upon switching on the power, light emanating from the light source 5 will be incident on the surface of the tire 30 through the lens 10. Then a sine pattern is projected on the tire surface by way of the sine diffraction grating 15 provided within the lens 10. Due to the white substance, sine patterns are distinctly formed on the tire surface. Subsequently, the digital camera 20 takes an image of the tire 30 including the sine pattern formed thereon, and the image is directly sent to the analyzer 25.

The analyzer 25 calculates the intensity of light, i.e., the intensity of the image obtained by the digital camera 20 using the Formula 1 as described hereinabove. By way of Fourier transform on the Formula 1 the image taken by the digital camera 20 is transformed into an image as shown in FIG. 3. The image of FIG. 3 is further transformed into an image illustrated in FIG. 4 with simplification of the Formula 3 by removing the imaginary part in the Formula 3. Subsequently, as the analyzer 25 proceeds an inverse Fourier transform on the Formula 4, the image depicted in FIG. 4 is changed into an image as shown in FIG. 5, wherein the image is displayed on the monitor in terms of amount of deformation calculated from the phase difference. From the differences in the color change or level on the monitor, it is possible to obtain information on the amount of actual deformation or change of the phase difference, i.e., the uniformity characteristics of the tire. It can be noted as alternatives that the amount of actual deformation in the tire can be numerically displayed on the monitor in terms of numerals quantitatively calculated from the phase difference.

In accordance with the present invention, it should be appreciated that the variation of radius or width of a tire being tested can be measured in the unloaded state, and a localized deformation in the sidewall can also be inspected without needs of rotating the tire like in the uniformity test machine in the prior art. Moreover, it should be noted that the inventive system is comprised of simple configuration, thereby leaving no limitation on the space for testing operation or installing of the test system. In addition, since the inventive method utilizes a photograph of a tire having a sine pattern on its surface and analyzing the sine pattern by a series of Fourier transform to provide an image or numerical data on the monitor, which enables the entire uniformity analysis to be performed in a short period of time with greater simplicity and efficiency.

While the invention has been shown and described with reference to a preferred embodiment, it should be apparent to those skilled in the art that many changes and modifications may be made without departing from the scope of the invention as defined in the claims.

**Claims**

1. A system for analyzing tire uniformity (1) comprising:

   a light source (5) for illuminating light on a sidewall of a tire (30) being tested, a white substance adapted to be applied on the sidewall of the tire (30);
   a diffraction grating (15) disposed on a same axis line between the light source (5) and the sidewall of the tire for producing light having a sine pattern, wherein the sine pattern has a plurality of long stripes;
   a photographing means (20) including a digital camera disposed in a certain angular relationship with the tire (30) for taking an image of the sidewall of the tire (30) having the sine pattern on its outer surface projected through the diffraction grating;

**EP 2 141 476 B1**

the system being **characterized in that** it further comprises an analyzer (25) for measuring the intensity of light of the image of the sidewall of the tire having the sine pattern on its surface and calculating a phase information by using a Fourier transform to determine uniformity of the tire (30).

2. The system (1) as recited in claim 1, **characterized in that** it further comprises a lens (10) equipped with the diffraction grating (15) in unitary fashion and disposed on the same axis line between the light source and the tire (30) for focusing the light emanating from the light source on the sidewall of the tire.

3. The system (1) as recited in claim 1, **characterized in that** the intensity of light irradiated on the sidewall of the tire having the sine pattern on its surface is expressed by the Formula 1,

$$I = A(x, y)\sin(\phi(x, y) + 1)$$ [Formula 1]

the Formula 1 is simplified by using the Fourier transform to express the Formula 4,

$$F(I(x,y)) = \frac{1}{2}[F(A\exp(i\phi))]$$ , [Formula 4]

, and the Formula 4 is further processed by inverse Fourier transform to calculate a phase information due to deformation of the tire.

4. A method for analyzing tire uniformity comprising the steps of:

illuminating light passed through a sine diffraction grating (15) on the sidewall of a tire (30) being tested, wherein the sine diffraction grating is disposed on a same axis line between the light source (5) and the tire for producing light having a sine pattern of a plurality of long stripes, and a white substance is applied on the sidewall of the tire (30);
photographing by using a digital camera (20) an image of the sidewall of the tire having the sine pattern projected on its sidewall surface by the diffraction grating;
the method being **characterized in that** it further comprises the steps of measuring the intensity of light of the image of the sine pattern, calculating a phase information by using a Fourier transform and analyzing the image of the sine pattern to determine the uniformity of the tire (30).

5. The method as recited in claim 4, **characterized in that** the step of analyzing includes the steps of expressing the intensity of light irradiated on the sidewall of the tire (30) having the sine pattern on its surface in the Formula 1;

$$I = A(x, y)\sin(\phi(x, y) + 1)$$ [Formula 1]

simplifying the Formula 1 by using the Fourier transform to the Formula 4; and

$$F(I(x,y)) = \frac{1}{2}[F(A\exp(i\phi))]$$ , [Formula 4]

calculating phase information due to deformation of the tire by using the inverse Fourier transform on the Formula 4.

6. The method as recited in claim 5, **characterized in that** the step of analyzing further includes the step of displaying the phase information on a monitor in an image with a different color level according to phase difference calculated.

7. The method as recited in claim 5 or 6, **characterized in that** the step of analyzing further includes the step of displaying the phase information on a monitor in a numeral numerically calculated from the phase difference.

8. The method as recited in any one of claims 5 to 7, characterize in that the step of analyzing further includes the

6

steps of transforming the phase difference between a perfect tire and a deformed tire into displacement; calculating the amount of actual deformation from said transforming step; and displaying the amount of actual deformation on a monitor in an image with a different color level.

9. The method as recited in any one of claims 5 to 8, **characterized in that** the step of analyzing further includes the steps of transforming the phase difference between a perfect tire and a deformed tire into displacement; calculating the amount of actual deformation from said transforming step; and displaying the amount of actual deformation on a monitor in numerals.

**Patentansprüche**

1. System zum Analysieren von Reifengleichmäßigkeit (1), umfassend:

   eine Lichtquelle (5) zum Leuchten von Licht auf eine Seitenwand eines Reifens (30), der geprüft wird,
   eine weiße Substanz, die dazu ausgelegt ist, auf eine Seitenwand des Reifens (30) aufgetragen zu werden,
   ein Beugungsgitter (15), das auf einer gleichen Achse zwischen der Lichtquelle (5) und der Seitenwand des Reifens angeordnet ist, um Licht zu erzeugen, das ein Sinusmuster hat, wobei das Sinusmuster mehrere lange Streifen aufweist,
   ein fotografisches Mittel (20), das eine Digitalkamera umfasst, die in einer bestimmten Winkelbeziehung zu dem Reifen (30) angeordnet ist, um ein Bild der Seitenwand des Reifens (30) aufzunehmen, auf deren äußere Oberfläche das Sinusmuster durch das Beugungsgitter projiziert wird,
   wobei das System **dadurch gekennzeichnet ist, dass** es ferner eine Analyseeinheit (25) zum Messen der Intensität des Lichts des Bildes der Seitenwand des Reifens, die auf ihrer Oberfläche das Sinusmuster hat, und Berechnen einer Phaseninformation unter Verwendung einer Fouriertransformation, um Gleichmäßigkeit des Reifens (30) zu bestimmen.

2. System (1) nach Anspruch 1, **dadurch gekennzeichnet, dass** es ferner eine Linse (10) umfasst, die mit dem Beugungsgitter (15) auf einheitliche Weise ausgestattet und auf derselben Achse zwischen der Lichtquelle und dem Reifen (30) angeordnet ist, um das Licht, das aus der Lichtquelle ausstrahlt, auf die Seitenwand des Reifens zu fokussieren.

3. System (1) nach Anspruch 1, **dadurch gekennzeichnet, dass** die Intensität des Lichts, das auf die Seitenwand des Reifens gestrahlt wird, die das Sinusmuster auf ihrer Oberfläche hat, durch die Formel 1 ausgedrückt wird,

$$I = A(x,y)\sin(\Phi(x,y) + 1) \qquad \text{[Formel 1]}$$

wobei die Formel 1 durch Anwenden der Fouriertransformation vereinfacht wird, um die Formel 4 auszudrücken,

$$F\big(I(x,y)\big) = \frac{1}{2}\left[F(A\exp(i\Phi))\right] \qquad , \qquad \text{[Formel 4]}$$

und die Formel 4 ferner einer inversen Fouriertransformation unterzogen wird, um eine durch Deformation des Reifens bedingte Phaseninformation zu berechnen.

4. Verfahren zum Analysieren von Reifengleichmäßigkeit, umfassend die folgenden Schritte:

   Leuchten von Licht, das durch ein Sinus-Beugungsgitter (15) fällt, auf eine Seitenwand eines Reifens (30), der geprüft wird, wobei das Sinus-Beugungsgitter auf einer selben Achse zwischen der Lichtquelle (5) und dem Reifen angeordnet ist, um Licht zu erzeugen, das ein Sinusmuster aus mehreren langen Streifen besitzt, und wobei eine weiße Substanz auf die Seitenwand des Reifens (30) aufgetragen wird,
   Fotografieren unter Verwendung einer Digitalkamera (20) eines Bildes der Seitenwand des Reifens, der das Sinusmuster auf seine Seitenwandoberfläche durch das Beugungsgitter projiziert bekommt,
   wobei das Verfahren **dadurch gekennzeichnet ist, dass** es ferner die Schritte des Messens der Intensität des Lichts des Bildes des Sinusmusters, Berechnens einer Phaseninformation unter Verwendung einer Fouriertransformation und des Analysierens des Bildes des Sinusmusters umfasst, um die Gleichmäßigkeit des Reifens (30) zu bestimmen.

5. Verfahren nach Anspruch 4, **dadurch gekennzeichnet, dass** der Schritt des Analysierens die folgenden Schritte umfasst:

Ausdrücken der Intensität des Lichts, das auf die Seitenwand des Reifens (30), der das Sinusmuster auf seiner Oberfläche hat, geleuchtet wird, durch die Formel 1,

$$I = A(x, y)\sin(\Phi(x, y) + 1) \qquad \text{[Formel 1]}$$

Vereinfachen der Formel 1 durch Verwenden der Fouriertransformation zur Formel 4

$$F\big(I(x, y)\big) = \frac{1}{2}\big[F\big(Aexp(i\Phi)\big)\big], \qquad \text{[Formel 4]}$$

und Berechnen von durch Deformation des Reifens bedingter Phaseninformation durch Anwenden der inversen Fouriertransformation auf Formel 4.

6. Verfahren nach Anspruch 5, **dadurch gekennzeichnet, dass** der Schritt des Analysierens ferner den Schritt des Anzeigens der Phaseninformation auf einem Monitor in einem Bild mit einer unterschiedlichen Farbabstufung entsprechend berechneter Phasendifferenz umfasst.

7. Verfahren nach Anspruch 5 oder 6, **dadurch gekennzeichnet, dass** der Schritt des Analysierens ferner den Schritt des Anzeigens der Phaseninformation auf einem Monitor als Zahl umfasst, die numerisch aus der Phasendifferenz berechnet wurde.

8. Verfahren nach einem der Ansprüche 5 bis 7, **dadurch gekennzeichnet, dass** der Schritt des Analysierens ferner die Schritte des Umwandelns der Phasendifferenz zwischen einem perfekten Reifen und einem deformierten Reifen in Verschiebung, Berechnens des Maßes der tatsächlichen Deformation aus dem Schritt des Umwandelns und des Anzeigens des Maßes der tatsächlichen Deformation auf einem Monitor in einem Bild mit unterschiedlicher Farbabstufung umfasst.

9. Verfahren nach einem der Ansprüche 5 bis 8, **dadurch gekennzeichnet, dass** der Schritt des Analysierens ferner die Schritte des Umwandelns der Phasendifferenz zwischen einem perfekten Reifen und einem deformierten Reifen in Verschiebung, Berechnens des Maßes der aktuellen Deformation aus dem Schritt des Umwandelns und des Anzeigens des Maßes der tatsächlichen Deformation auf einem Monitor als Zahlen umfasst.

## Revendications

1. Système pour analyser l'uniformité d'un pneumatique (1) comprenant :

une source de lumière (5) pour rayonner une lumière sur une paroi latérale d'un pneumatique (30) testé, une substance blanche étant conçue pour être appliquée sur la paroi latérale du pneumatique (30) ;
un réseau de diffraction (15) disposé sur une même ligne d'axe entre la source de lumière (5) et la paroi latérale du pneumatique pour produire une lumière présentant un motif sinusoïdal, dans lequel le motif sinusoïdal comporte une pluralité de longues bandes ;
des moyens de photographie (20) comprenant un appareil photographique numérique disposé dans une certaine relation angulaire avec le pneumatique (30) pour prendre une image de la paroi latérale du pneumatique (30) présentant le motif sinusoïdal sur sa surface extérieure projeté à travers le réseau de diffraction ;
le système étant **caractérisé en ce qu'**il comprend en outre un analyseur (25) pour mesurer l'intensité de la lumière de l'image de la paroi latérale du pneumatique présentant le motif sinusoïdal sur sa surface et calculer des informations de phase en utilisant une transformation de Fourier pour déterminer l'uniformité du pneumatique (30).

2. Système (1) selon la revendication 1, **caractérisé en ce qu'**il comprend en outre une lentille (10) équipée d'un réseau de diffraction (15) de manière unitaire et disposée sur la même ligne d'axe entre la source de lumière et le pneumatique (30) pour focaliser la lumière sortant de la source de lumière sur la paroi latérale du pneumatique.

3. Système (1) selon la revendication 1, **caractérisé en ce que** l'intensité de la lumière rayonnée sur la paroi latérale du pneumatique présentant le motif sinusoïdal sur sa surface est exprimée par la formule 1,

$$I = A(x, y)\sin(\phi(x, y) + 1) \qquad \text{[Formule 1]}$$

la formule 1 est simplifiée en utilisant la transformation de Fourier pour exprimer la formule 4,

$$F(I(x, y)) = \frac{1}{2}[F(A\exp(i\phi))], \qquad \text{[Formule 4]}$$

et la formule 4 est en outre traitée par une transformation de Fourier inverse pour calculer des informations de phase dues à une déformation du pneumatique.

4. Procédé pour analyser l'uniformité d'un pneumatique comprenant les étapes :

de rayonnement de la lumière qui a traversé un réseau de diffraction sinusoïdal (15) sur la paroi latérale d'un pneumatique (30) testé, dans lequel le réseau de diffraction sinusoïdal est disposé sur une même ligne d'axe entre la source de lumière (5) et le pneumatique pour produire une lumière présentant un motif sinusoïdal d'une pluralité de longues bandes, et une substance blanche est appliquée sur la paroi latérale du pneumatique (30) ; de prise, en utilisant un appareil photographique numérique (20), d'une image de la paroi latérale du pneumatique présentant le motif sinusoïdal projeté sur sa surface de paroi latérale par le réseau de diffraction ; le procédé étant **caractérisé en ce qu'**il comprend en outre les étapes de mesure de l'intensité de lumière de l'image du motif sinusoïdal, de calcul d'informations de phase en utilisant une transformation de Fourier et d'analyse de l'image du motif sinusoïdal pour déterminer l'uniformité du pneumatique (30).

5. Procédé selon la revendication 4, **caractérisé en ce que** l'étape d'analyse comprend les étapes consistant à exprimer l'intensité de la lumière rayonnée sur la paroi latérale du pneumatique (30) présentant le motif sinusoïdal sur sa surface par la formule 1 ;

$$I = A(x, y)\sin(\phi(x, y) + 1) \qquad \text{[Formule 1]}$$

simplifier la formule 1 en appliquant la transformation de Fourier à la formule 4 ; et

$$F(I(x, y)) = \frac{1}{2}[F(A\exp(i\phi))], \qquad \text{[Formule 4]}$$

calculer des informations de phase dues à une déformation du pneumatique en appliquant la transformation de Fourier inverse à la formule 4.

6. Procédé selon la revendication 5, **caractérisé en ce que** l'étape d'analyse comprend en outre l'étape d'affichage des informations de phase sur un moniteur dans une image avec un niveau de couleur différent en fonction de la différence de phase calculée.

7. Procédé selon la revendication 5 ou 6, **caractérisé en ce que** l'étape d'analyse comprend en outre l'étape d'affichage des informations de phase sur un moniteur par un nombre calculé numériquement à partir de la différence de phase.

8. Procédé selon l'une quelconque des revendications 5 à 7, **caractérisé en ce que** l'étape d'analyse comprend en outre les étapes de transformation de la différence de phase entre un pneumatique parfait et un pneumatique déformé en un déplacement ; de calcul de la quantité de déformation réelle à partir de ladite étape de transformation ; et d'affichage de la quantité de déformation réelle sur un moniteur dans une image avec un niveau de couleur différent.

**9.** Procédé selon l'une quelconque des revendications 5 à 8, **caractérisé en ce que** l'étape d'analyse comprend en outre les étapes de transformation de la différence de phase entre un pneumatique parfait et un pneumatique déformé en un déplacement ; de calcul de la quantité de déformation réelle à partir de ladite étape de transformation ; et d'affichage de la quantité de déformation réelle sur un moniteur par des nombres.

FIG. 1

FIG. 2

FIG. 3

FIG. 4

FIG. 5

FIG. 6

FIG. 7

FIG. 8

**EP 2 141 476 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4458526 A
- US 5022186 A
- US 5103669 A
- US 5365781 A

- DE 10019387
- EP 1500917 A
- US 4506981 A